Europäisches Patentamt

European Patent Office

Office européen des brevets

(11) Veröffentlichungsnummer: **0 046 276**
**B 1**

(12) **EUROPÄISCHE PATENTSCHRIFT**

(45) Veröffentlichungstag der Patentschrift:
27.07.83

(21) Anmeldenummer: 81106316.3

(22) Anmeldetag: 13.08.81

(51) Int. Cl.³: **C 02 F 1/40**, C 02 F 1/28,
E 03 F 5/16

(54) **Anlage zur Reinigung von Abwasser.**

(30) Priorität: 14.08.80 DE 3030831

(43) Veröffentlichungstag der Anmeldung:
24.02.82 Patentblatt 82/8

(45) Bekanntmachung des Hinweises auf die Patenterteilung:
27.07.83 Patentblatt 83/30

(84) Benannte Vertragsstaaten:
AT CH DE FR LI NL

(56) Entgegenhaltungen:
DE-A-2 424 563
DE-A-2 657 818
DE-A-2 949 960

(73) Patentinhaber: Passavant-Werke AG & Co. KG,
D-6209 Aarbergen 7 (DE)

(72) Erfinder: Fiedler, Siegfried, Gartenstrasse 1,
D-5409 Bremberg (DE)
Erfinder: Plettenberg, Werner, Ziegelstrasse 39,
D-7920 Heidenheim/Brenz (DE)
Erfinder: Weiler, Walter, Wilhelmstrasse 59, D-6252 Diez
(DE)

(74) Vertreter: Glawe, Delfs, Moll & Partner Patentanwälte,
Postfach 26 01 62 Liebherrstrasse 20,
D-8000 München 26 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Anlage zur Reinigung von Abwasser

Die Erfindung betrifft eine Anlage zur Reinigung von Abwasser, bestehend aus einem Leichtflüssigkeitsabscheider und einer Nachreinigungseinrichtung für das den Abscheider verlassende Abwasser, wobei die Nachreinigungseinrichtung ein Filtermaterial insbesondere aus oleophilem und hydrophobem Material enthält.

Aufgrund der strengen Einleitungsvorschriften ist es notwendig, den Restgehalt an Leichtflüssigkeiten des einen Abscheiders, beispielsweise Benzinabscheider, verlassenden Abwassers noch weiter zu senken. Hierzu wurde bisher das Abwasser mit Hilfe eines Drehsprengers durch ein aus oleophilem und hydrophobem Material bestehendes Filter geleitet.

Drehsprenger sind jedoch teure und wartungsintensive Bauteile. Außerdem ist bei geringem Abwasseranfall die Verteilung schlecht, weil der Rückstoß der Wasserstrahlen zu gering ist, um den Drehsprenger anzutreiben. Wenn nur ein geringes Druckgefälle vorhanden ist, reicht unter Umständen auch der maximale Abwasseranfall zum Sprengerantrieb nicht aus.

Aufgabe der vorliegenden Erfindung ist es, eine Anlage zur Reinigung von Abwasser mit einer billigen und wartungsfreundlichen Nachreinigungseinrichtung für das einen Leichtflüssigkeitsabscheider verlassende Abwasser zu schaffen, bei der auch bei geringem Abwasseranfall eine zufriedenstellende Verteilung erzielt werden kann.

Diese Aufgabe wird erfindungsgemäß gelöst durch eine Anlage der eingangs genannten Art, gekennzeichnet durch eine das Abwasser über das Filtermaterial leitende stillstehende Verteilervorrichtung, die mit dem Wasserablauf des Leichtflüssigkeitsabscheiders kommunizierend verbunden ist und die Überfallkanten aufweist, die auf gleicher Höhe liegen wie der durch den Wasserüberlauf des Leichtflüssigkeitsabscheiders bestimmte Flüssigkeitsspiegel des im Abscheider gereinigten Wassers. Bei einer derartigen Anlage werden aufgrund der kommunizierenden Verbindung zwischen Wasserablauf und Leichtflüssigkeitsabscheider auch geringe anfallende Abwassermengen zufriedenstellend verteilt. Außerdem wird dadurch jegliche Spiegelschwankung im Abscheider vermieden, so daß die aufgeschwommene Leichtflüssigkeit über eine fest eingestellte Skimrinne abgezogen werden kann, ohne daß die Gefahr besteht Wasser mitabzuziehen.

Zum Einfüllen und Auswechseln des Filtermaterials ist die Verteilvorrichtung zweckmäßigerweise so ausgebildet, daß sie herausgehoben oder hochgeklappt werden kann. Um insbesondere das Herausnehmen des Filtermaterials zu erleichtern, kann eine Einrichtung, die das Filtermaterial aufnimmt, vorgesehen und mit der Verteileinrichtung derart verbunden sein, daß beim Herausheben oder Hochklappen der Verteileinrichtung auch das Filtermaterial mit herausgeholt wird. Werden Körbe verwendet, so sind diese vorteilhafterweise mit Boden- und/oder Seitenklappen versehen.

Zur Erzielung einer gleichmäßigen Verteilung des Abwassers kann die Verteilvorrichtung rund mit radial und/oder konzentrisch und/oder diagonal und/oder tangential verlaufenden Verteilrinnen ausgebildet sein. Mehrere konzentrische Rinnen sind über mindestens eine Radialrinne und mehrere radial verlaufende Rinnen über mindestens eine kreisförmige Rinne miteinander verbunden. Die Verteilvorrichtung kann aber auch rechteckig mit beispielsweise kammartig von außen nach innen verlaufenden Verteilrinnen ausgebildet sein. Bei ausreichender Fallhöhe zwischen den Verteilrinnen und der Filterschicht können unterhalb der Verteilrinnen Streuelemente, beispielsweise Prallkegel angeordnet sein, um die Flüssigkeit noch weiter zu verteilen. Das Filtermaterial kann bis zur Überfallkante der Verteilvorrichtung, zweckmäßigerweise jedoch bis an den Boden der Verteilvorrichtung reichen.

Ausführungsformen der Erfindung werden anhand der folgenden Figuren beschrieben. Es zeigt

Fig. 1 eine erste erfindungsgemäße Nachreinigungseinrichtung im Schnitt,

Fig. 2a und 2b für eine Nachreinigungseinrichtung gemäß Fig. 1 verwendbare Verteilvorrichtungen in der Draufsicht,

Fig. 3 eine zweite Ausführungsform einer Verteilvorrichtung in der Draufsicht,

Fig. 4a und 4b eine Einzelheit einer Verteilrinne in der Seitenansicht und im Schnitt,

Fig. 5 eine dritte Ausführungsform im Schnitt, wobei die rechte Hälfte die Einrichtung in der Entleerungsstellung zeigt,

Fig. 6 eine Draufsicht zu Fig. 5 und

Fig. 7 eine vierte Ausführungsform im Längsschnitt.

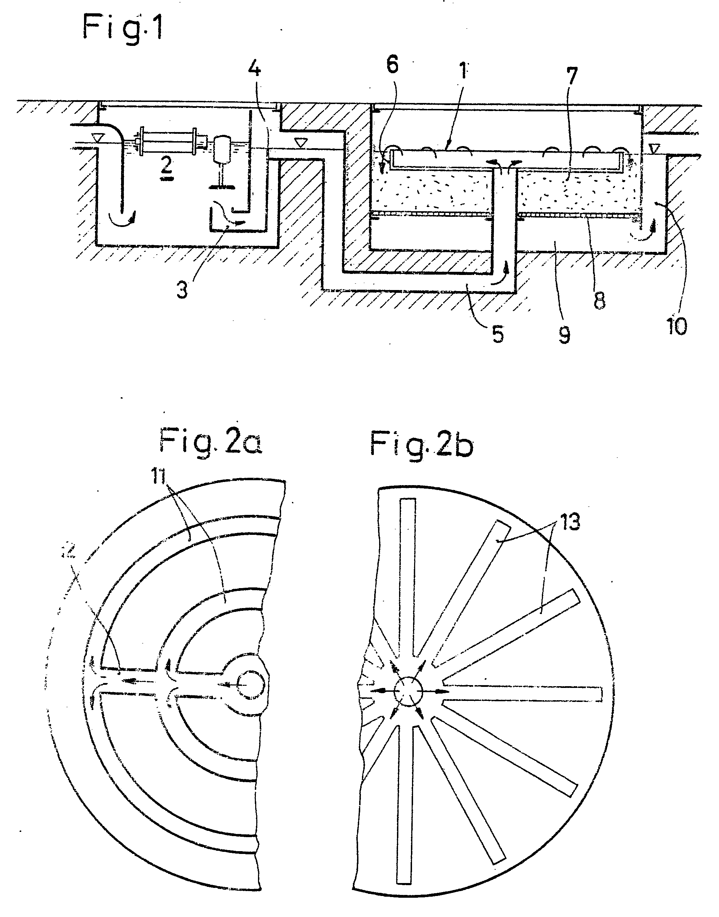

Die in Fig. 1 gezeigte Nachreinigungseinrichtung für das einen Leichtflüssigkeitsabscheider verlassende Abwasser besteht aus einer stillstehenden Verteilvorrichtung 1, die gleichzeitig als stauarmes Ablaufbauwerk für einen Abscheider 2 dient. Das am Abscheider 2 über den Kanal 3 abgeführte Abwasser gelangt über einen Überlauf 4 in die Nachreinigungseinrichtung und läuft entsprechend der Höhe des Flüssigkeitsspiegels im Abscheider 2 durch die Leitung 5 in die Verteilvorrichtung 1. Die Überfallkanten 6 der Verteilvorrichtung 1 liegen auf der gleichen Höhe wie die Höhe des gewünschten Flüssigkeitsspiegels im Abscheider 2. Unterhalb der Verteilvorrichtung 1 befindet sich ein Filtermaterial 7, beispielsweise oleophiles und hydrophobes Material in körniger bis brockenförmiger Form, welches durch eine mit Bohrungen versehene Platte 8 gehalten ist. Das Filtermaterial 7 kann bis an die Überfallkante 6 der Verteilvorrichtung heranreichen, zweckmäßigerweise reicht es jedoch lediglich bis an den Boden der Verteilvorrichtung 1. Das durch die Filterschicht 7 durchgelaufene und dabei gereinigte Abwasser sammelt sich im Becken 9 unterhalb der Platte 8 und wird über den Kanal 10 abgeführt.

Wie aus den Fig. 2a und 2b ersichtlich, kann die Verteilvorrichtung in einem runden Becken rund ausgebildet sein. Das mittig zugeführte Abwasser wird dann über konzentrische Verteilrinnen 11, die über mindestens eine radial angeordnete Rinne 12 miteinander verbunden sind, auf dem Filtermaterial verteilt. Die runde Verteilvorrichtung kann gemäß Fig. 2b auch mit ausschließlich radial nach außen verlaufenden Verteilrinnen 13 versehen sein.

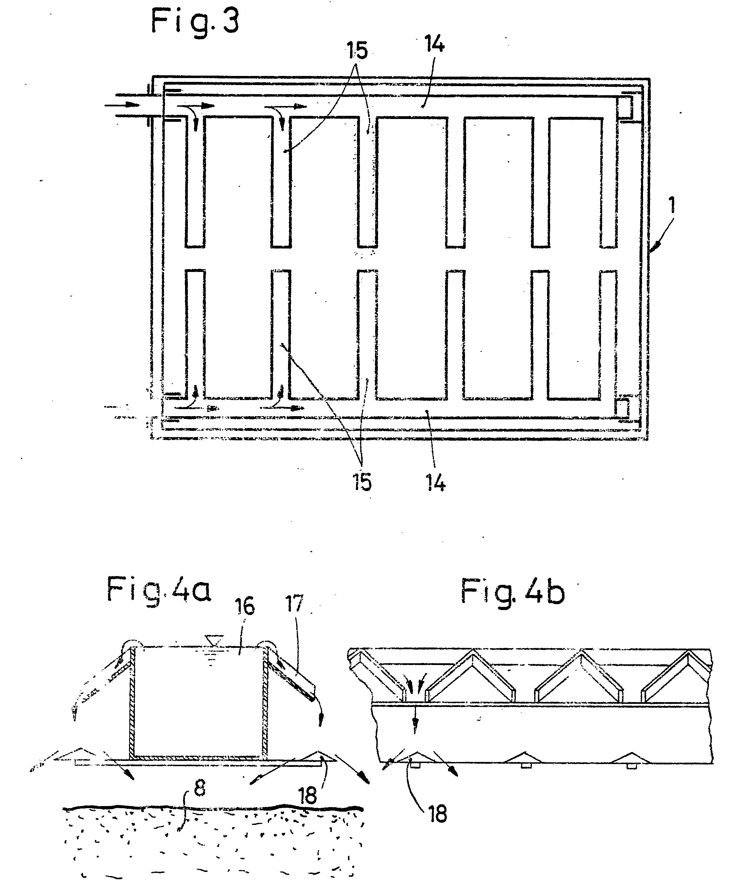

In der Fig. 3 ist eine in der Draufsicht rechteckige Verteilvorrichtung 1 für ein rechteckiges Becken gezeigt, bei der das Abwasser an zwei einander gegenüberliegenden Seiten zugeführt wird und über von zwei einander gegenüberliegenden Seitenrinnen 14 nach innen kammartig abgehenden Verteilrinnen 15 dem Filtermaterial zugeführt wird.

Bei der in der Fig. 4 gezeigten Ausführungsform einer Verteilrinne wird das Abwasser von den Überfallkanten der Rinne 16 auf schräg nach außen ragende Leitbleche 17 gegeben. Unterhalb der Leitbleche 17 sind Prallkegel 18 oder andere Streuelemente angeordnet, die eine weitere Verteilung des Abwassers bewirken. Derartige Prallkegel können immer dann angeordnet sein, wenn zwischen den Verteilrinnen und dem Filtermaterial 8 eine ausreichend große Fallhöhe vorhanden ist.

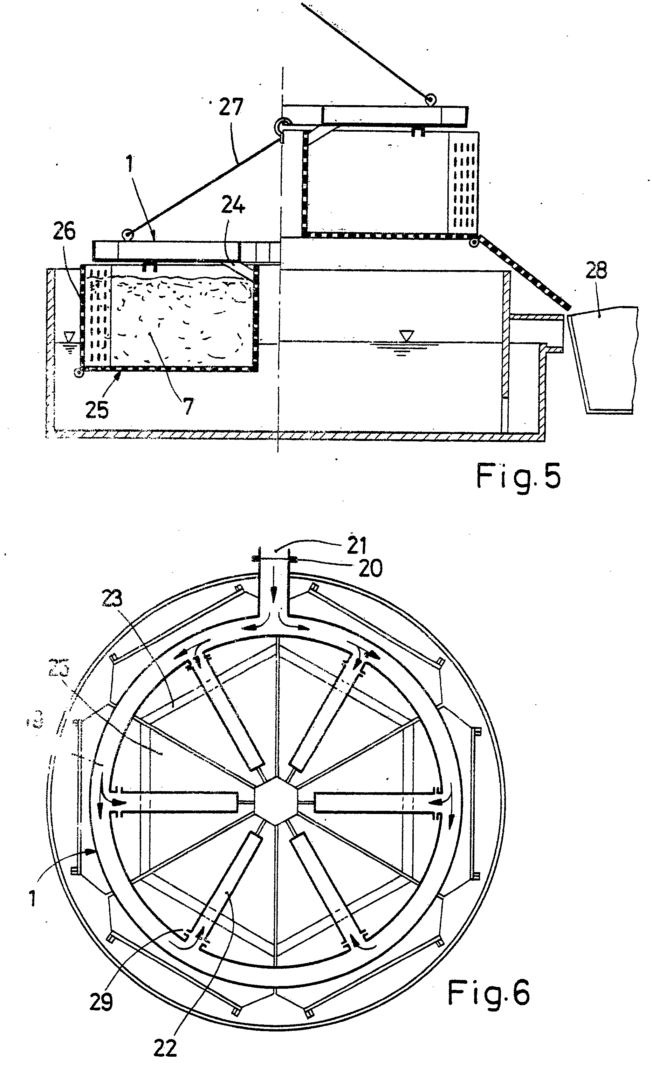

Bei der in den Fig. 5 und 6 gezeigten Ausführungsform sind an einer ringförmigen Verteilrinne 19, die durch eine lösbare Rohrkupplung 20 mit dem Zulaufrohr 21 verbunden ist, sechs radial nach innen verlaufende Zweigrinnen 22 angeschlossen. An den Zweigrinnen 22 sind mittels Traversen 23 und Laschen 24 Filterkörbe 25 befestigt, die jeweils einen Sextanten des kreisförmigen Beckens ausfüllen. Jeder Korb 25 ist mit einer seitlichen Klappe 26 versehen, die wie aus der rechten Seite der Fig. 5 ersichtlich, um eine untere Kante nach außen geklappt werden kann. Zum Auswechseln des Filtermaterials 7 wird die aus Rippen 19, 22 und Körben 25 bestehende Einheit beispielsweise mittels Seilen 27 angehoben, bis die Korbböden oberhalb des Beckenrandes liegen. Die Klappen 26 werden dann geöffnet und das Filtermaterial 7 kann in außen beigestellte Behälter 28 entleert werden. Das Füllen der Körbe 25 mit neuem Filtermaterial 7 kann bei abgesenkten Körben 25 erfolgen. Zweckmäßigerweise ist die Verteil- und Filtereinheit auf Konsolen (nicht dargestellt) abgestützt.

Statt der seitlichen Klappen 26 können selbstverständlich auch die Korbböden als Klappen ausgebildet sein. Da jeder Zweigrinne 22 ein Korb 25 zugeordnet ist, kann auch ein Korb weggelassen sein, ohne daß der Betrieb unterbrochen werden muß, da hierzu lediglich der Rinnenanschluß 29 der entsprechenden Rinne 22 durch einen Blindflansch verschlossen werden muß.

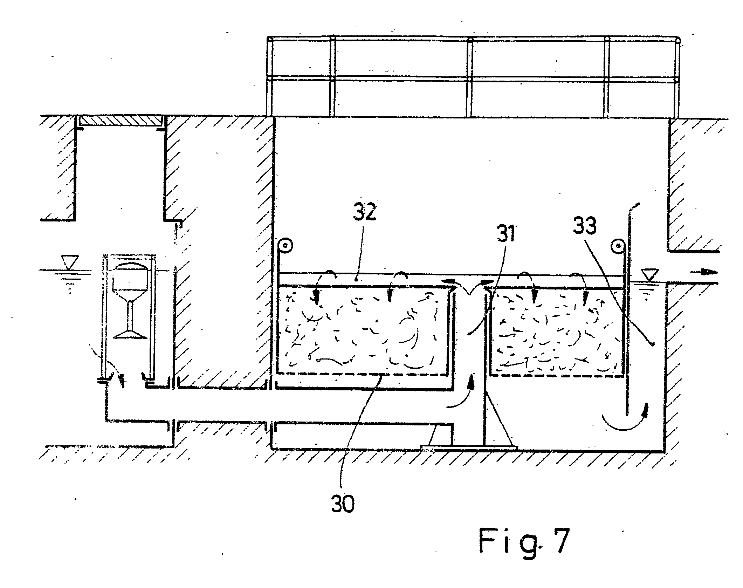

Bei der in der Fig. 7 gezeigten Ausführungsform handelt es sich um eine Anlage, die nicht allzu groß ist und daher mit einem einzigen Filterkorb 30 auskommt. Der Zulauf des Abwassers erfolgt hierbei über ein Dükerrohr 31 zentral von unten, so daß die Verbindungsleitung wie auch bei der anhand der Fig. 1 bereits beschriebenen Bauart, nicht mehr hochgeführt werden muß. Das Dükerrohr 31 dient gleichzeitig als Stütze für den Korb 30, der lediglich aufgesteckt ist. Die Verteilrinnen 32 sind fester Bestandteil des Korbes 30; der Auslaufteil 33 kann im Beckenquerschnitt integriert sein und nimmt lediglich einen dem Korb 30 dann fehlenden Kreisabschnitt ein.

## Patentansprüche

1. Anlage zur Reinigung von Abwasser bestehend aus einem Leichtflüssigkeitsabscheider und einer Nachreinigungseinrichtung für das den Abscheider verlassende Abwasser, wobei die Nachreinigungseinrichtung ein Filtermaterial insbesondere aus oleophilem und hydrophobem Material enthält, gekennzeichnet durch eine das Abwasser über das Filtermaterial (7) leitende stillstehende Verteilvorrichtung (1), die mit dem Wasserablauf des Leichtflüssigkeitsabscheiders (2) kommunizierend verbunden ist und die Überfallkanten (6) aufweist, die auf gleicher Höhe liegen wie der durch den Wasserüberlauf des Leichtflüssigkeitsabscheiders (2) bestimmte Flüssigkeitsspiegel des im Abscheider (2) gereinigten Wassers.

2. Anlage nach Anspruch 1, dadurch gekennzeichnet, daß die Verteilvorrichtung für das Einfüllen und Auswechseln des Filtermaterials (7) herausgehoben werden kann.

3. Anlage nach Anspruch 1, dadurch gekennzeichnet, daß die Verteilvorrichtung (1) für das Einfüllen und Auswechseln des Filtermaterials (7) hochgeklappt werden kann.

4. Anlage nach einem der Ansprüche 1 bis 3, dadurch gekennzeichnet, daß die Verteilvorrichtung (1) mit einer Einrichtung (25, 30) zur Aufnahme des Filtermaterials (7) verbunden ist, die beim Herausheben oder Hochklappen der Verteilvorrichtung (1) mit herausgehoben oder hochgeklappt wird.

5. Anlage nach Anspruch 4, dadurch gekennzeichnet, daß die Einrichtung zur Aufnahme des Filtermaterials (7) ein mit Boden- und/oder Seitenklappen (26) versehener Korb (25) ist.

6. Anlage nach Anspruch 1 bis 5, dadurch gekennzeichnet, daß die Verteilvorrichtung höhenverstellbar und kippbar ausgebildet ist, um ungenauen Einbau und nachträgliche Senkungen ausgleichen zu können.

7. Anlage nach Anspruch 1, dadurch gekennzeichnet, daß das Filtermaterial (7) bis zur Überfallkante (6) der Verteilvorrichtung (1) reicht.

8. Anlage nach Anspruch 1, dadurch gekennzeichnet, daß das Filtermaterial (7) bis zum Boden der Verteilvorrichtung (1) reicht.

9. Anlage nach Anspruch 1, dadurch gekennzeichnet, daß die Verteilvorrichtung (1) kreisförmig mit radial verlaufenden Verteilrinnen (13) ausgebildet ist.

10. Anlage nach Anspruch 1, dadurch gekennzeichnet, daß die Verteilvorrichtung (1) kreisförmig mit konzentrischen Verteilrinnen (11) und mindestens einer, die konzentrischen Verteilrinnen (11) verbindenden Rinne (12) ausgebildet ist.

11. Anlage nach Anspruch 1, dadurch gekennzeichnet, daß die Verteilvorrichtung (1) kreisförmig mit radial verlaufenden Verteilrinnen (13) und mindestens einer, die radialen Verteilrinnen verbindenden kreisförmigen Rinne versehen ist.

12. Anlage nach Anspruch 1, dadurch gekennzeichnet, daß die Verteilvorrichtung (1) kreisförmig mit radial und/oder konzentrisch und/oder diagonal und/oder tangential verlaufenden Verteilrinnen versehen ist.

13. Anlage nach Anspruch 1, dadurch gekennzeichnet, daß die Verteilvorrichtung (1) rechteckig mit kammartig nach innen verlaufenden Verteilrinnen (15) ausgebildet ist.

14. Anlage nach Anspruch 1, dadurch gekennzeichnet, daß die Verteilvorrichtung (1) rechteckig mit diagonal verlaufender Hauptrinne und von dieser im Winkel abgehenden Zweigrinnen ausgebildet ist.

15. Anlage nach Anspruch 1, 9, 10, 11, 12, 13 und 14, dadurch gekennzeichnet, daß bei ausreichender Fallhöhe unterhalb der Verteilrinnen die Flüssigkeit weiterverteilende Streuelemente, beispielsweise Prallkegel (18) angeordnet sind.

## Claims

1. Installation for cleansing waste water, comprising a light-liquid separator and a subsequent cleansing device for the waste water leaving the separator, the subsequent cleansing device containing a filter material, in particular of oleophilic and hydrophobic material, characterised by a stationary distributing device (1) directing the waste water over the filter material (7), which device is in communicating connection with the water outlet of the light-liquid separator (2) and which has overflow edges (6) which are situated at the same height as the liquid level of the cleansed water in the separator (2), which level is determined by the water outlet of the light-liquid separator (2).

2. Installation according to Claim 1, characterised in that the distributing device can be removed for the insertion and replacement of the filter material (7).

3. Installation according to Claim 1, characterised in that the distributing device (1) can be pivoted upwardly for the insertion and replacement of the filter material (7).

4. Installation according to one of Claims 1 to 3, characterised in that the distributing device (1) is connected to a device (25, 30) for receiving the filter material (7), which device (25, 30), upon removal or pivoting movement of the distributing device (1), is removed or pivoted upwardly therewith.

5. Installation according to Claim 4, characterised in that the device for receiving the filter material (7) is a cage (25) provided with bottom and/or side flaps (26).

6. Installation according to Claims 1 to 5, characterised in that the distributing device is designed to be vertically adjustable and inclinable so as to make it possible to compensate for inaccurate installation and subsequent settlement.

7. Installation according to Claim 1, characterised in that the filter material (7) extends up to the overflow edge (6) of the distributing device (1).

8. Installation according to Claim 1, characterised in that the filter material (7) extends up to the bottom of the distributing device (1).

9. Installation according to Claim 1, characterised in that the distributing device (1) is of circular design with radially extending distributing channels (13).

10. Installation according to Claim 1, characterised in that the distributing device (1) is of circular design with concentric distributing channels (11) and at least one channel (12) connecting the concentric distributing channels (11).

11. Installation according to Claim 1, characterised in that the distributing device (1) is circular and provided with radially extending distributing channels (13) and at least one circular channel connecting the radial distributing channels.

12. Installation according to Claim 1, characterised in that the distributing device (1) is circular and provided with radially and/or concentrically and/or diagonally and/or tangentially extending distributing channels.

13. Installation according to Claim 1, characterised in that the distributing device (1) is rectangular with distributing channels (15) extending inwardly in cog-tooth like fashion.

14. Installation according to Claim 1, characterised in that the distributing device (1) is rectangular with a diagonally extending main channel and branch channels inclined to the main channel.

15. Installation according to Claims 1, 9, 10, 11, 12, 13 and 14, characterised in that, in the case of adequate height of fall, spreading elements, for example deflector cones (18), are arranged below the distributing channels for further distribution of the liquid.

## Revendications

1. Installation pour l'épuration d'eaux d'égout, se composant d'un séparateur de liquides légers et d'un dispositif d'épuration ultérieure pour les eaux d'égout qui quittent le séparateur, le dispositif d'épuration ultérieure contenant un matériau filtrant, en particulier en une matière oléophile et hydrophobe, caractérisée en ce qu'elle comporte un dispositif répartiteur fixe (1) pour envoyer les eaux d'égout sur la matière filtrante (7), dispositif qui est en communication avec l'écoulement d'eau du séparateur de liquide légers (2) et qui comporte des arêtes de trop-plein (6) situées à la même hauteur que le niveau de l'eau purifiée dans le séparateur de liquides légers (2), niveau qui est déterminé par le déversoir d'eau de ce séparateur (2).

2. Installation selon la revendication 1, caractérisée en ce que le dispositif répartiteur peut être retiré par soulèvement pour la mise en place et le remplacement de la matière filtrante (7).

3. Installation selon la revendication 1, caractérisée en ce que le dispositif répartiteur (1) peut être basculé vers le haut pour la mise en place et le remplacement de la matière filtrante (7).

4. Installation selon l'une quelconque des revendications 1 à 3, caractérisée en ce que le dispositif répartiteur (1) est raccordé à un dispositif (25, 30) qui est destiné à recevoir la matière filtrante (7) et qui est retiré par soulèvement ou basculé vers le haut, en même temps que le dispositif répartiteur (1) lorsque celui-ci est retiré par soulèvement ou basculé vers le haut.

5. Installation selon la revendication 4, caractérisée en ce que le dispositif destiné à recevoir la matière filtrante (7) est un panier (25) muni de trappes (26) sur les côtés et/ou sur le fond.

6. Installation selon l'une quelconque des revendications 1 à 5, caractérisée en ce que le dispositif répartiteur est réalisé de manière à pouvoir être déplacé en hauteur et à pouvoir basculer, afin qu'il soit possible de compenser une installation imprécise et des affaissements ultérieurs.

7. Installation selon la revendication 1, caractérisée en ce que la matière filtrante (7) s'élève jusqu'à l'arête de trop-plein (6) du dispositif répartiteur (1).

8. Installation selon la revendication 1, caractérisée en ce que la matière filtrante s'élève jusqu'au fond du dispositif répartiteur (1).

9. Installation selon la revendication 1, caractérisée en ce que le dispositif répartiteur (1) est réalisé sous forme circulaire avec des rigoles de distribution (13) qui s'étendent radialement.

10. Installation selon la revendication 1, caractérisée en ce que le dispositif répartiteur (1) est réalisé sous forme circulaire avec des rigoles de distribution concentriques (11) et au moins une rigole (12) qui relie les rigoles de distribution concentriques (11).

11. Installation selon la revendication 1, caractérisée en ce que le dispositif répartiteur (1) est réalisé sous forme circulaire et est muni de rigoles de distribution (13) qui s'étendent radialement et d'au moins une rigole circulaire qui relie les rigoles de distribution radiales.

12. Installation selon la revendication 1, caractérisée en ce que le dispositif répartiteur (1) est réalisé sous forme circulaire et est muni de rigoles de distribution qui s'étendent radialement et/ou concentriquement et/ou en diagonale et/ou tangentiellement.

13. Installation selon la revendication 1, caractérisée en ce que le dispositif répartiteur (1) est réalisé sous forme rectangulaire avec des rigoles de distribution (15) qui s'étendent vers l'intérieur en dents de peigne.

14. Installation selon la revendication 1, caractérisée en ce que le dispositif répartiteur (1) est réalisé sous forme rectangulaire avec des rigoles principales qui s'étendent en diagonale et des rigoles secondaires qui s'en détachent suivant un angle.

15. Installation selon l'une quelconque des revendications 1 et 9 à 14, caractérisée en ce qu'en cas de hauteur de chute suffisamment, il est disposé, au-dessous des rigoles de distribution, des éléments de dispersion, par exemple des cônes d'éparpillement (18), qui répartissent davantage encore le liquide.

# Fig.1

# Fig.2a

# Fig.2b

# Fig. 3

# Fig. 4a

# Fig. 4b

Fig.5

Fig.6

Fig. 7